# EUROPEAN PATENT SPECIFICATION

(11) **EP 3 211 236 B1**
(45) Date of publication and mention of the grant of the patent: **30.09.2020**
(21) Application number: 17157912.1
(22) Date of filing: 24.02.2017
(51) Int. Cl.: F04B 39/10, F04B 39/12, F04B 39/08, F04B 35/04, F04B 53/10

(54) **IMPROVED AIR COMPRESSOR**
VERBESSERTER LUFTVERDICHTER
COMPRESSEUR À AIR AMÉLIORÉ

(30) Priority: 26.02.2016 TW 105106034
(43) Date of publication of application: 30.08.2017
(73) Proprietor: Chou, Wen-San, Tainan City (TW)
(72) Inventor: Chou, Wen-San, Tainan City (TW)
(74) Representative: Lang, Christian

(56) References cited:
- EP-A1- 0 571 715
- EP-A1- 2 937 568
- GB-A- 1 415 406
- US-A- 5 562 431
- US-A1- 2003 185 695
- US-A1- 2007 212 242

## Description

### (a) Technical Field of the Invention

The present invention relates to an air compressor and, more particularly, to an improved air compressor, wherein a cylinder thereof is fitted with a piston body and defines a plurality of exit holes at its top wall and is provided at its top wall with a plurality of air blocking walls, which can isolate the exit holes from each other at a certain extent, and the exit holes are regulated by a resilient sheet to be opened or closed, the resilient sheet having a root and a plurality of branches extending from the root and corresponding to the exit holes, whereby the piston body can conduct reciprocating motion more smoothly and thus the performance of the air compressor can be increased.

### (b) Description of the Prior Art

Generally, an air compressor has a cylinder which allows a piston body to conduct reciprocating motion therein to produce compressed air which can overcome a valve mechanism, so that the compressed air can flow through an exit hole of the cylinder to enter the inner space of an air storage container or an air tank. The air storage container is provided with outlets for delivering the compressed air to an object to be inflated.

In conventional air compressors, there is only one exit hole defined at the cylinder for outputting the compressed air into the air storage container. The exit hole of the cylinder is controlled by a valve mechanism, which generally includes a plug and a compression spring, so that the exit hole can be opened or closed properly according to the pressure of the compressed air. In operation, the compressed air produced in the cylinder can overcome the compressive force of the compression spring to enter the inner space of the air compressor. However, the compressed air stored in the air storage container can exert a back force on the plug, thus restraining the plug from being moved away from the exit hole. As a result, the piston body, which conducts reciprocating motion in relation to the cylinder, will be subjected to greater resistance. Therefore, the piston body may not move smoothly in relation to the cylinder, and thus the speed of inflating an object may decrease. Furthermore, the motor of the air compressor may become too hot, thus decreasing the performance of the motor. Even worse, the motor may be under the risk of burning out.

Patent application publication EP 0571715 A describes a piston compressor having a cylinder head with intake holes and exit holes, both of which are covered by a flapper valve, respectively The intake holes and the exit holes are arranged within a recess, respectively, and are each surrounded by a raised lip against which the respective flapper valve seals when in the closed position.

From patent application publication EP 2937568 A1 an air compressor is known having only one exit hole in its cylinder head. The exit hole is surrounded by a plurality of axially extending tabs, whereat between adjacent tabs a gap is arranged, respectively.

Patent specification US 5562431 A describes a gas compressor having a plurality of exit holes covered by branches of a flexible reed or by finger valves, but there are no means for blocking a lateral air flow after the air has passed the exit holes.

Patent specification GB 1415406 A discloses an air compressor having only one exit hole since this document is silent with respect to a plurality of exit holes. Further, although according to document GB 1415406 A the sealing ring stands proud of the valve seat when the tongue of the flexible valve is in the open position, this is not a technical teaching of how a lateral air flow of air that passes the exit hole can be avoided, but merely of how a good sealing effect can be achieved when the tongue of the valve is in the closed position, namely by compressing the sealing ring which is arranged in a groove surrounding the exit hole.

From patent application publication US 2003/0185695 A1 a head pressure relief assembly is known having a flexible exhaust valve assembly with a plurality of fingers that cover each an exit hole formed in a valve plate. On the surface of the valve plate a recess is arranged in which the valve assembly is mounted. Nevertheless, there is no physical barrier between the exit holes so that air passing the exit holes can freely flow laterally within the recess accommodating the valve assembly.

From patent application publication an air pump is known with a cylinder whose top surface comprises a plurality of exit holes being covered by bendable portions of an outlet valve plate. This document describes further a cylinder mount having an "urging branched plate" arranged in its interior. However, this urging branched plate is for limiting the upward movement (amplitude) of the bendable portions of the valve plate which cover the exit holes. That is, the different portions of the urged branched plate are positioned above the bendable portions of the valve plate, not between them. There is necessarily a gap between the valve plate in its closed position and the lower edges of the urged branched plate so that air passing the exit holes can flow laterally within the cylinder mount, when the valve is in its opened position.

In view of the foregoing, the applicant intends to develop an improved air compressor which can solve the shortcomings of conventional air compressors.

### SUMMARY OF THE INVENTION

The present invention provides an air compressor with the features of claim 1. Further embodiments are subject-matter of the dependent claims. A cylinder of the air compressor according to the invention is fitted with a piston body and defines at its top wall a plurality of exit holes, and is provided at its top wall with a plurality of air blocking walls, which can isolate the exit holes from each other at a certain extent, and the exit holes are regulated by a control mechanism to be opened or closed; the control mechanism includes a resilient sheet having a root and a plurality of branches extending from the root and corresponding to the exit holes; whereby when the compressed air produced in the cylinder pushes the branches of the resilient sheet up to open the exit holes, the instantaneous high-pressure air that flows through the exit holes can be restrained by the air blocking walls to prevent the air from interfering with movements of the branches of the resilient sheet, so that the piston body can conduct reciprocating motion more smoothly and thus the performance of the air compressor can be increased.

According to one aspect of the present invention, the root and the branches of the resilient sheet are individually attached to the top wall of the cylinder at separate fixed points, whereby each of the branches of the resilient sheet can be moved individually by the compressed air without affecting movements of the other branches, so that the piston body can conduct reciprocating motion more smoothly, and thus the performance of the air compressor and the speed of inflating an object can be increased.

Other objects, advantages, and novel features of the present invention will become more apparent from the following detailed description when taken in conjunction with the accompanying drawings.

### BRIEF DESCRIPTION OF THE DRAWINGS

FIG. 1 shows a 3-dimensional view of an air compressor according to a first embodiment of the present invention.
FIG. 2 shows an exploded view of the air compressor of the first embodiment.
FIG. 3 shows a plan view of the air compressor of the first embodiment, wherein a plurality of exit holes defined at a cylinder thereof are revealed.
FIG. 4 shows a plan view of the air compressor of the first embodiment, wherein a resilient sheet being used to seal the exit holes is revealed.
FIG. 5 shows a plan view of the air compressor of the first embodiment, wherein an air storage container is assembled onto the cylinder.
FIG. 6 shows a sectional view of the air compressor of the first embodiment taken along line A-A in FIG. 5.
FIG. 7 shows a 3-dimensional sectional view of the air compressor of the first embodiment.
FIG. 8 shows a plan view of the air compressor of the first embodiment, wherein a gear and a piston body used in the air compressor are revealed.
FIG. 9 shows a 3-dimensional view of an air compressor according to a second embodiment of the present invention.
FIG. 10 shows a plan view of the air compressor of the second embodiment, wherein a plurality of exit holes defined at a cylinder thereof are revealed.
FIG. 11 shows a plan view of the air compressor of the second embodiment, wherein a resilient sheet being used to seal the exit holes is revealed.
FIG. 12 shows a plan view of the air compressor of the second embodiment, wherein an air storage container is assembled onto the cylinder
FIG. 13 shows a sectional view of the air compressor of the second embodiment taken along line B-B in FIG. 12, wherein the resilient sheet is sealing the exit holes.
FIG. 14 shows a sectional view of the air compressor of the second embodiment taken along line B-B in FIG. 12, wherein the branches of the resilient sheet are pushed up by the compressed air in the cylinder.
FIG. 15 shows a fragmentary enlarged view of the air compressor of the second embodiment, wherein the branches of the resilient sheet are pushed up by the compressed air in the cylinder.
FIG. 16 shows an exploded view of an air compressor according to a third embodiment of the present invention, wherein compression springs are not included.

### DETAILED DESCRIPTION OF THE PREFERRED EMBODIMENTS

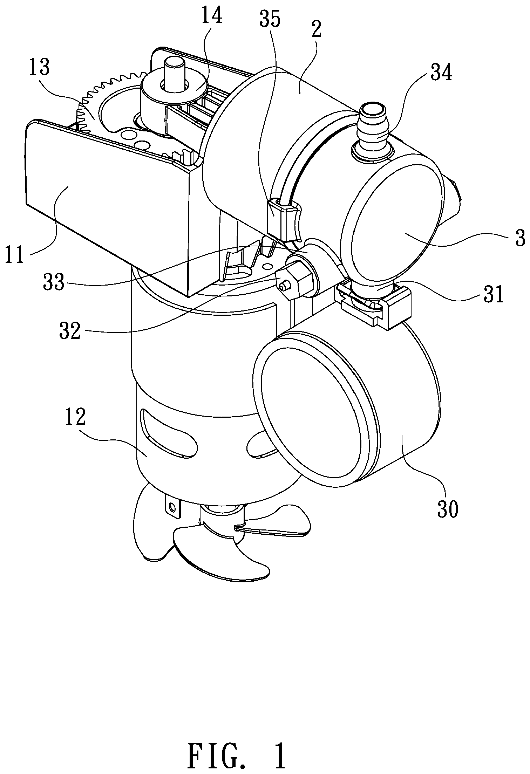

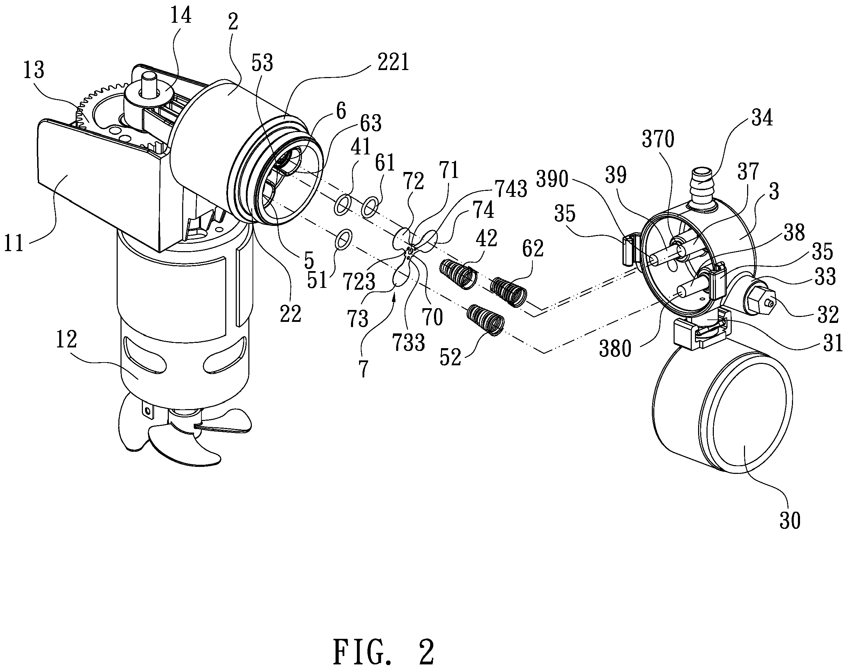

Referring to FIGS. 1 and 2, an improved air compressor according to a first embodiment of the present invention is shown, which generally comprises a main frame 11 for mounting a motor 12, and a cylinder 2 fitted with a piston body 14. The motor 12 can rotate a gear 13 to drive the piston body 14 to conduct reciprocating motion in relation to the cylinder 2 so as to produce compressed air, which can enter an air storage container 3 provided with one or more outlets, wherein, for example, the outlet 31 can be connected with a pressure gauge 30; the outlet 33 can be connected with a relief valve 32; the outlet 34 can be connected with a hose for inflating an object (not shown).

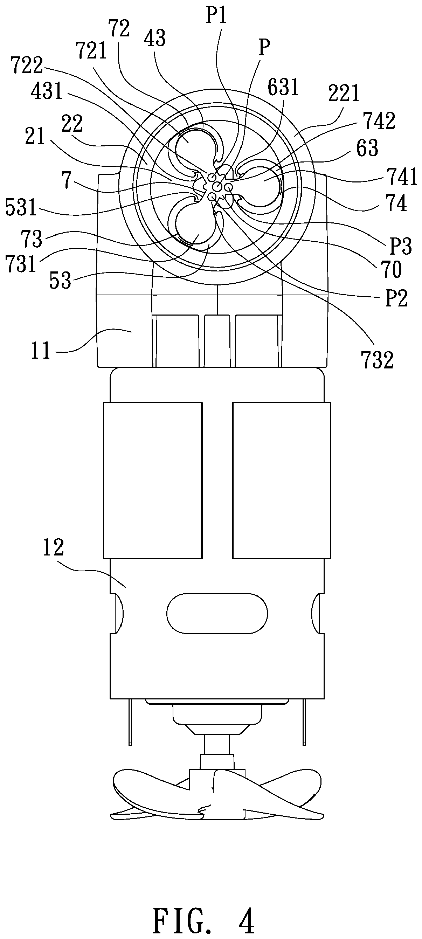

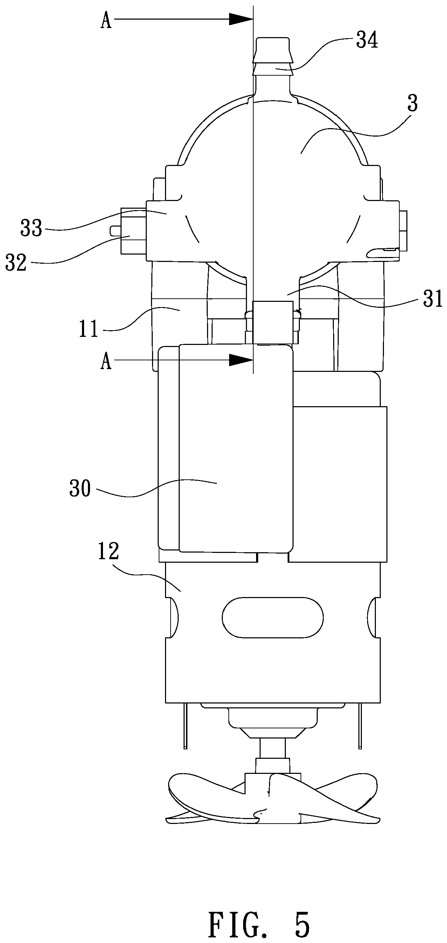

As shown in FIGS. 2 through 8, the cylinder 2 of the present invention is designed in a way different from conventional technology, wherein the cylinder 2 defines a plurality of exit holes and a plurality of air blocking walls at an interface thereof, which refers to the top wall 21 in the present invention. Through the exit holes, the compressed air produced in the cylinder can be outputted to a container or tank. Furthermore, the cylinder 2, which includes the exit holes and the air blocking walls, can be formed integrally with the main frame 11. In this embodiment, three exit holes 4, 5, 6 are defined at the top wall 21, and three cylindrical air blocking walls 43, 53, 63 are formed at the top wall 21 and surround the exit holes 4, 5, 6, respectively. The air blocking walls 43, 53, 63 respectively define openings 431, 531, 631, which face a central axis of the cylinder 2. The exit holes 4, 5, 6 are regulated by a control mechanism to be opened or closed, wherein the control mechanism includes O-rings 41, 51, 61, compression springs 42, 52, 62, and a resilient sheet 7. The O-rings 41, 51, 61 can be placed around the exit holes 4, 5, 6, respectively. The resilient sheet 7 has a root 70 and three branches including a first branch 72, a second branch 73, and a third branch 74, which correspond to the exit holes 4, 5, 6 respectively. The root 70 of the resilient sheet 7, which is substantially located at a center of the resilient sheet 7, defines a central positioning hole 71. The three branches 72, 73, 74 extend from the root 70 to appear as a star configuration. The first branch 72 has a first neck portion 722 extending from the root 70 and terminating at a first leaf 721, and defines a first positioning hole 723 at one end of the first neck portion 722 close to the root 70. The second branch 73 has a second neck portion 732 extending from the root 70 and terminating at a second leaf 731, and defines a second positioning hole 733 at one end of the second neck portion 732 close to the root 70. The third branch 74 has a third neck portion 742 extending from the root 70 and terminating at a third leaf 741, and defines a third positioning hole 743 at one end of the third neck portion 742 close to the root 70. The central positioning hole 71 of the root 70 can be fitted over a main boss 24 provided at the top wall 21 of the cylinder 2, wherein the main boss 24 is located at a central point (P). The first positioning hole 723 of the first branch 72 can be fitted over a first boss 241 provided at the top wall 21 of the cylinder 2, wherein the first boss 241 is located at a peripheral point (P1) close to the central point (P). The second positioning hole 733 of the second branch 73 can be fitted over a second boss 242 provided at the top wall 21 of the cylinder 2, wherein the second boss 242 is located at a peripheral point (P2) close to the central point (P). The third positioning hole 743 of the third branch 74 can be fitted over a third boss 243 provided at the top wall 21 of the cylinder 2, wherein the third boss 243 is located at a peripheral point (P3) close to the central point (P). The peripheral points (P1, P2, P3) are individual and separate from the central point (P); namely, there is a distance between each of the peripheral points (P1, P2, P3) and the central point (P). The first branch 72, the second branch 73, and the third branch 74 are attached to the top wall 21, respectively at the peripheral points (P1, P2, P3). As shown in FIG. 4, the first neck portion 722 of the first branch 72, the second neck portion 732 of the second branch 73, and the third neck portion 742 of the third branch 74 are respectively fitted through the openings 431, 531, 631 of the air blocking walls 43, 53, 63, wherein the first leaf 721 of the first branch 72, the second leaf 731 of the second branch 73, and the third leaf 741 of the third branch 74 are located within the air blocking walls 43, 53, 63 and in tight contact with the O-rings 41, 51, 61 to seal the exit holes 4, 5, 6, respectively. The first, second and third leaves 721, 731, 741 are configured to have sizes sufficient for covering the exit holes 4, 5, 6. Each of the compression springs 42, 52, 62 has one end in contact with one of the branches 72, 73, 74 of the resilient sheet 7 (see

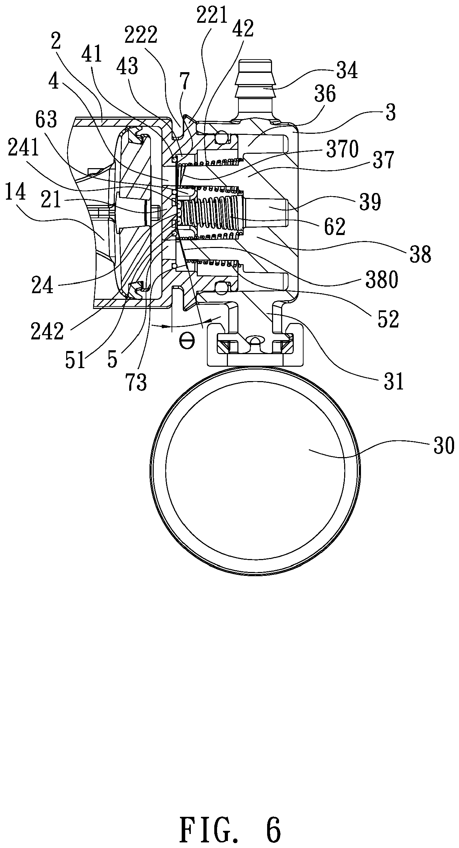

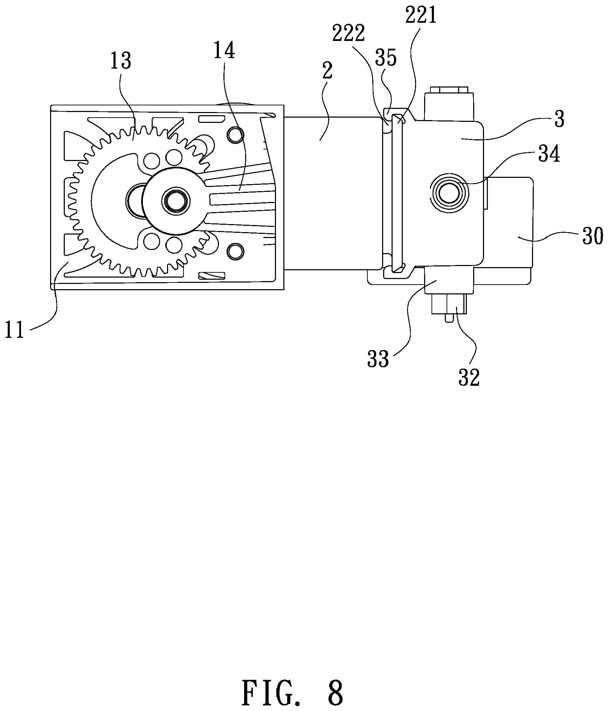

FIGS.2, 6 and 7). The cylinder 2 has a tubular projection 22 formed on the top wall 21. The tubular projection 22 is provided at its outer surface with a circular flange 221 and defines an annular groove 222 between the circular flange 221 and the top wall 21 (see FIG. 8). The air storage container 3 is provided at an outer surface thereof with two coupling means 35 capable of being inserted into the annular groove 222 and engaged with the circular flange 221 of the cylinder 2. The air storage container 3 is provided at an inner surface thereof with a plurality of columns 37, 38, 39 corresponding to the branches 72, 73, 74 of the resilient sheet 7. Each of the column 37, 38, 39 is formed at its distal end with a limiting surface 370, 380 or 390, which is at a predetermined angle (θ) to the top wall 21 (θ > 0)(see FIG. 6); namely, the distal ends of the columns 37, 38, 39 are not parallel to the top wall 21. Each of the compression springs 42, 52, 62 has another end being fitted at the distal end of one of the columns 37, 38, 39. The compressive forces of the compression springs 42, 52, 62 enable the branches 72, 73, 74 of the resilient sheet 7 to seal the exit holes 4, 5, 6 respectively. Each of the columns 37, 38, 39 is located at a predetermined height above the corresponding branch of the resilient sheet 7 to limit the movement of the corresponding branch so that the resilient sheet 7 can be prevented from elastic fatigue. In particular, when the first, second and third branches 72, 73, 74 are pushed by the compressed air to move away from the exit holes 4, 5, 6, due to the branches 72, 73, 74 being in full surface contact with the limiting surfaces 370, 380, 390 of the columns 37, 38, 39, the first, second and third branches 72, 73, 74 can conduct the closing or opening operation more stably.

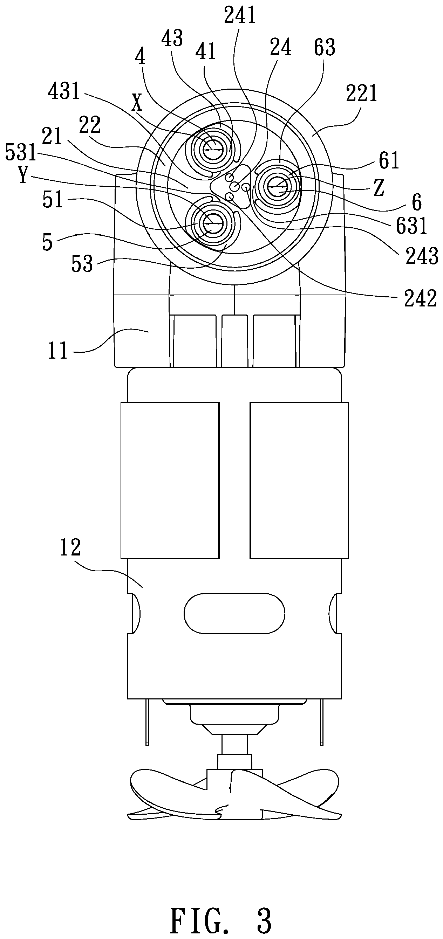

The exit hole 4 is defined to have a diameter of (X); the exit hole 5 is defined to have a diameter of (Y); the exit hole 7 is defined to have a diameter of (Z). As shown in FIG. 3, the exit holes 4, 5, 6 are equal in diameter; however, this is not a limitation for the structure of the exit holes. The exit holes may be defined to have different diameters.

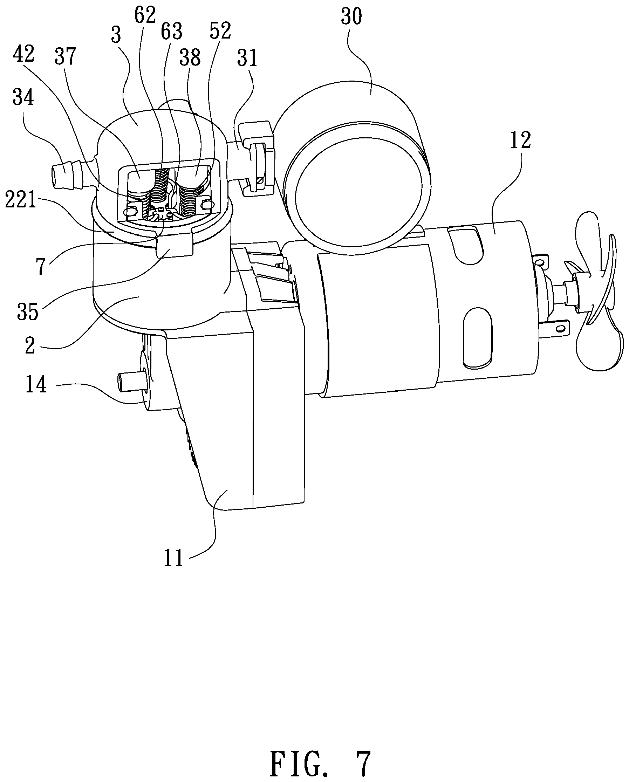

Referring to FIGS. 6 and 7, when the piston body 14 conducts reciprocating motion, the compressed air produced in the cylinder 2 can overcome the force of the compression springs 42, 52, 62 exerted on the branches 72, 73, 74 of the resilient sheet 7, thus pushing the branches 72, 73, 74 to move away from the equal-diameter exit holes 4, 5, 6, respectively, so that the compressed air can flow into the inner space 36 of the air storage container 3. Initially, since the compressed air can flow into the inner space 36 of the air storage container 3 simultaneously via the exit holes 4, 5, 6, the air storage container 3 can be filled with a large amount of air in a short time. Later, since there is a large amount of air having entered the inner space 36 of the air storage container 3, the air contained in the air storage container 3 can exert a greater back force on the branches 72, 73, 74 of the resilient sheet 7 compared to the initial air contained in the air storage container 3. In other words, the piston body 14 may experience greater resistance in conducting reciprocating motion, and this may cause the exit holes 4, 5, 6 more difficult to be opened. However, upon a decrease of the pressure of the air contained in the air storage container 3, the back force exerted on the branches 72, 73, 74 of the resilient sheet 7 will decrease and this allows the compressed air produced in the cylinder 2 to quickly enter the inner space 36 of the air storage container 3. Besides, the first neck portion 722, the second neck portion 732, and the third neck portion 742 are attached to the top wall 21 of the cylinder 2 at separate fixed points. The air blocking walls 43, 53, 63 can respectively confine the first leaf 721 of the first branch 72, the second leaf 731 of the branch 73, and the third leaf 741 of the third branch 74 therein, and are configured to have predetermined heights greater than maximum distances that the branches 72, 73, 74 of the resilient sheet 7 can be pushed up by the compressed air to travel, so that the air blocking walls 43, 53, 63 can restrain the instantaneous high-pressure air that flows through the exit holes 4, 5, 6, thus preventing the air from interfering with movements of the branches 72, 73, 74 of the resilient sheet 7, so that the piston body 14 can conduct reciprocating motion more smoothly and thus the performance of the air compressor and the speed of inflating an object can be increased.

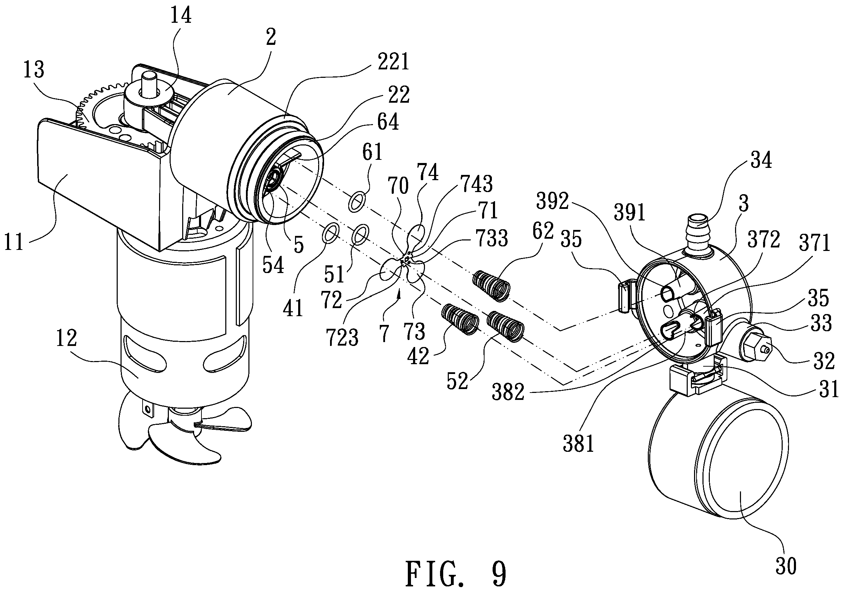

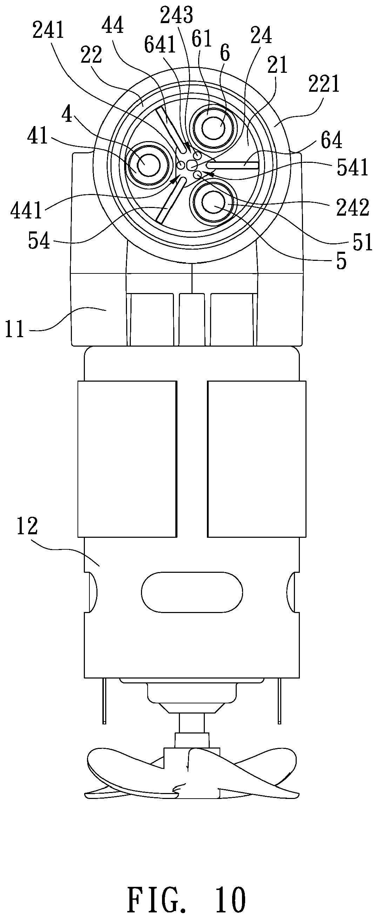

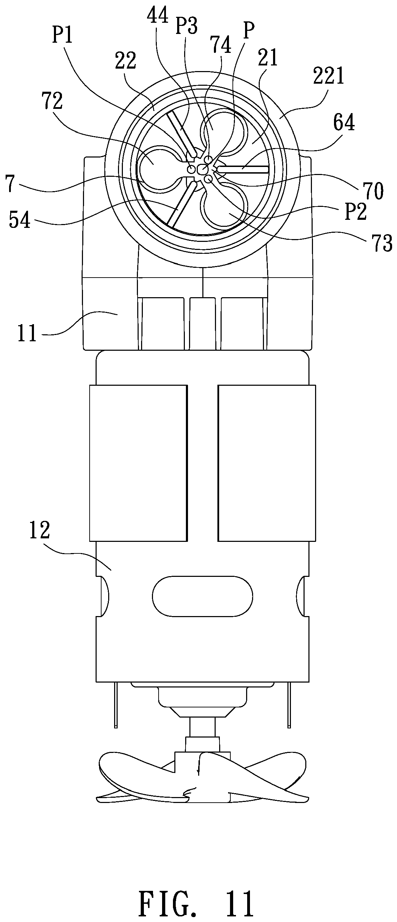

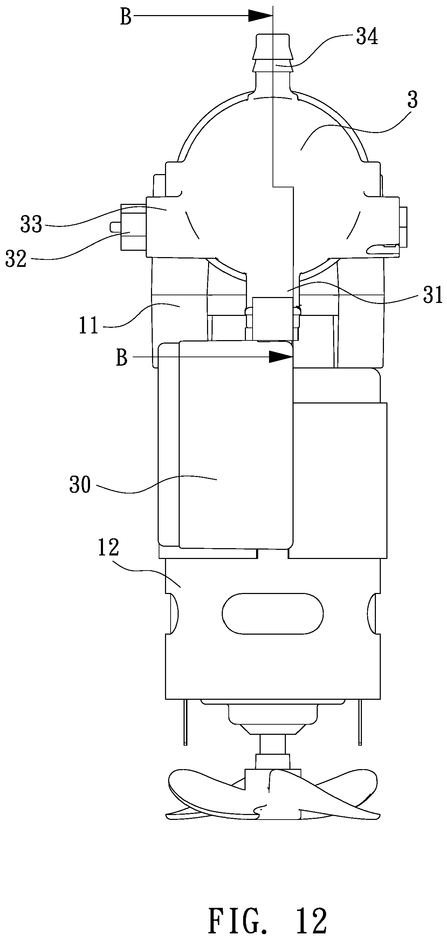

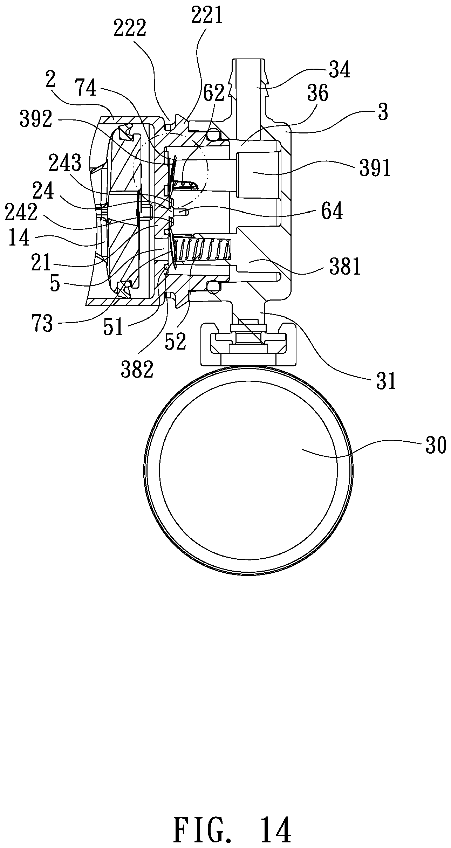

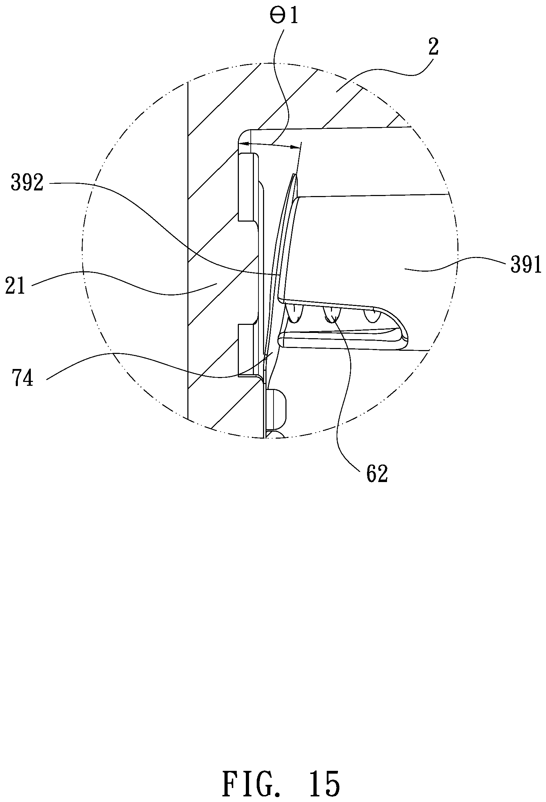

FIGS. 9 through 15 show a second embodiment of the present invention, wherein the air blocking walls 44, 54, 64 are planar walls, each planar wall being located between two adjacent exit holes and extending from the tubular projection 22 towards a central axis of the cylinder 2, thus defining a plurality of gaps 441, 541, 641 between the planar walls 44, 54, 64, so that the exit holes 4, 5, 6 can be isolated from each other at a certain extent. The gaps 441, 541, 641 allow the branches 72, 73, 74 of the resilient sheet 7 to be fitted over the exit holes 4, 5, 6, so that the branches 72, 73, 74 can be disposed in tight contact with the O-rings 41, 51, 61 to seal the exit holes 4, 5, 6, respectively (see FIG. 11).

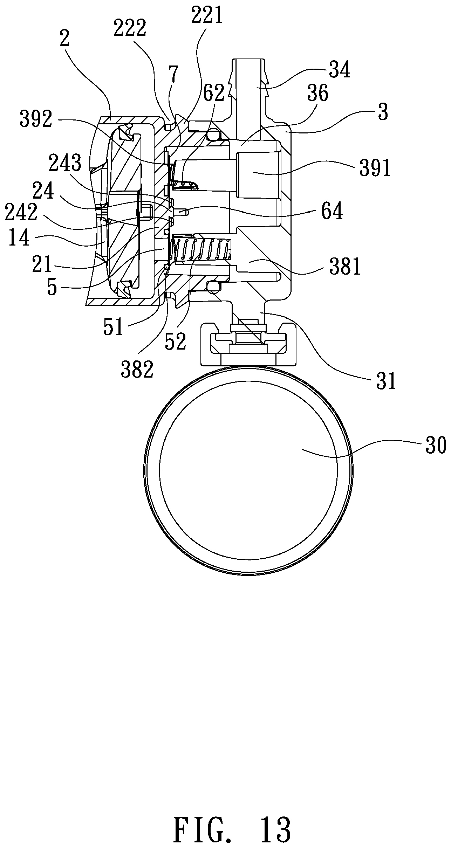

In the second embodiment of the present invention, the air storage container 3 is provided at an inner surface thereof with a plurality of hollow columns 371, 381, 391 corresponding to the branches 72, 73, 74 of the resilient sheet 7. Each of the hollow columns 371, 381, 391 is formed at its distal end with a limiting surface 372, 382 or 392 (see FIGS. 13 through 15), which is at a predetermined angle (θ1) to the top wall 21 (θ1 > 0); namely, the limiting surfaces 372, 382, 392 are not parallel to the top wall 21. Being similar to the first embodiment, the air storage container 3 is provided at an outer surface thereof with two coupling means 35 capable of being inserted into the annular groove 222 and engaged with the circular flange 221 of the cylinder 2. Each of the compression springs 42, 52, 62 has one end forcing against one of the branches of the resilient sheet 7, and has another end being fitted into the distal end of one of the hollow columns 371, 381, 391. The compressive forces of the compression springs 42, 52, 62 enable the branches 72, 73, 74 of the resilient sheet 7 to seal the exit holes 4, 5, 6, respectively; wherein each of the hollow columns 371, 381, 391 is located at a predetermined height above the corresponding branch of the resilient sheet 7 to limit the movement of the corresponding branch so that the resilient sheet 7 can be prevented from elastic fatigue. In particular, when the branches 72, 73, 74 are pushed by the compressed air to move away from the exit holes 4, 5, 6, due to the branches 72, 73, 74 being in full surface contact with the limiting surfaces 372, 382, 392 of the hollow columns 371, 381, 391, the branches of the resilient sheet can conduct the closing or opening operation more stably.

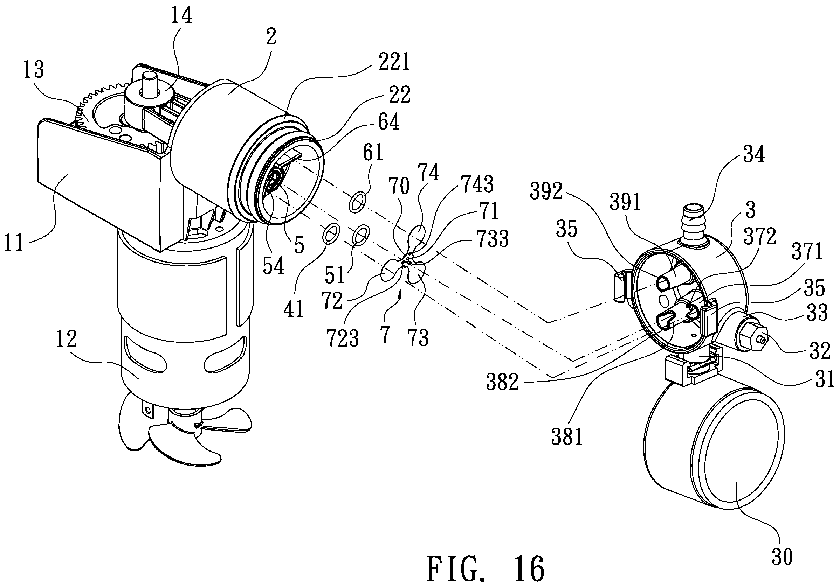

In the first and second embodiments, as shown in FIGS. 2 and 9, the branches 72, 73, 74 of the resilient sheet 7 are respectively subjected to the compressive forces of the compression springs 42, 52, 62, so that the branches 72, 73, 74 can seal the exit holes 4, 5, 6 more quickly. Nevertheless, in a third embodiment of the air compressor, as shown in FIG. 16, the compression springs 42, 52, 62 employed in the first and second embodiments can be dispensed with; namely, the branches 72, 73, 74 can provide compressive forces by themselves without additional springs to be in tight contact with the O-rings 41, 51, 61, thus sealing the exit holes 4, 5, 6.

As a summary, the air compressor of the present invention has a breakthrough over the prior art in that the top wall 21 of the cylinder 2 defines a plurality of exit holes, which are controlled by a resilient sheet 7 to allow the compressed air produced in the cylinder 2 to quickly enter the inner space 36 of the air storage container 3. In addition, the neck portions 722, 732, 742 of the branches 72, 73, 74 of the resilient sheet 7 are attached to the top wall 21 at separate fixed points, and the air blocking walls 43, 53, 63, 44, 54, 64 can isolate the exit holes 4, 5, 6 from each other at a certain extent, so that when the compressed air produced in the cylinder 2 pushes the branches 72, 73, 74 of the resilient sheet 7 up to open the exit holes 4, 5, 6, the instantaneous high-pressure air that flows through the exit holes 4, 5, 6 can be restrained by the air blocking walls 43, 53, 63, 44, 54, 64, thus preventing the air from interfering with movements of the branches 72, 73, 74 of the resilient sheet 7, so that the piston body 14 can conduct reciprocating motion more smoothly and thus the performance of the air compressor can be increased. These features render the air compressor of the present invention useful and inventive.

## Claims

1. Air compressor including a main frame (11) for mounting a motor (12), and a cylinder (2) fitted with a piston body (14), the motor (12) capable of driving the piston body (14) to conduct reciprocating motion to produce in the cylinder (2) compressed air which enters an air storage container (3) via exit holes defined at a top wall (21) of the cylinder (2); wherein the top wall (21) of the cylinder (2) is provided with a plurality of exit holes (4, 5, 6) and the exit holes (4, 5, 6) are regulated by a control mechanism to be opened or closed, the control mechanism including a resilient sheet (7) having a root (7) and a plurality of branches (72, 73, 74) extending from the root (7) and corresponding to the exit holes (4, 5, 6),
**characterised in that**
the exit holes (4, 5, 6) have air blocking walls (43, 53, 63)(44, 54, 64) which isolate the exit holes from each other, wherein the air blocking walls (43, 53, 63) are cylindrical walls respectively surrounding the exit holes (4, 5, 6), each of the cylindrical walls defining an opening facing a central axis of the cylinder (2), whereby, when the compressed air produced in the cylinder (2) pushes the branches of the resilient sheet (7) up to open the exit holes (4, 5, 6), the instantaneous high-pressure air that flows through the exit holes (4, 5, 6) is restrained by the air blocking walls to prevent the air from interfering with movements of the branches of the resilient sheet (7), so that the piston body (14) conducts reciprocating motion more smoothly and thus the performance of the air compressor is increased.

2. The air compressor of claim 1, wherein the root (70) of the resilient sheet (7) is attached to the top wall (21) at a central point (P), the branches (72, 73, 74) of the resilient sheet (7) being attached to the top wall (21) respectively at peripheral points (P1, P2, P3) close to the central point (P), whereby each of the branches (72, 73, 74) of the resilient sheet (7) is individually movable by the compressed air without affecting movements of the other branches, so that the piston body (14) conducts reciprocating motion more smoothly and thus the performance of the air compressor is increased.

3. The air compressor of claim 1, wherein the cylinder (2), including the exit holes (4, 5, 6) and the air blocking walls (43, 53, 63)(44, 54, 64), is formed integrally with the main frame (11).

4. The air compressor of claim 2, wherein the control mechanism further includes a plurality of O-rings (41, 51, 61) and a plurality of compression springs (42, 52, 62), the O-rings (41, 51, 61) being placed around the exit holes (4, 5, 6) respectively.

5. The air compressor of claim 4, wherein the root (70) is substantially located at a center of the resilient sheet (7) and defines a central positioning hole (71); the branches (72, 73, 74) extends from the root (70) to appear as a star configuration and includes a first branch (72), a second branch (73), and a third branch (74), the first branch (72) having a first neck portion (722), which extends from the root (70) and terminates at a first leaf (721), and defining a first positioning hole (723) at one end of the first neck portion (722) close to the root (70), the second branch (73) having a second neck portion (732), which extends from the root (70) and terminates at a second leaf (731), and defining a second positioning hole (733) at one end of the second neck portion (732) close to the root (70), the third branch (74) having a third neck portion (742), which extends from the root (70) and terminates at a third leaf (741), and defining a third positioning hole (743) at one end of the third neck portion (742) close to the root (70), the central positioning hole (71) of the root (70) being fitted over a main boss (24) provided at the top wall (21) of the cylinder (2), the first positioning hole (723) of the first branch (72) being fitted over a first boss (241) provided at the top wall (21) of the cylinder (2), the second positioning hole (733) of the second branch (73) being fitted over a second boss (242) provided at the top wall (21) of the cylinder (2), the third positioning hole (743) of the third branch (74) being fitted over a third boss (243) provided at the top wall (21) of the cylinder (2), the first, second and third leaves (721, 731, 741) being configured to have sizes sufficient for covering the exit holes (4, 5, 6); whereby the branches (72, 73, 74) of the resilient sheet (7) are in tight contact with the O-rings (41, 51, 61) to seal the exit holes (4, 5, 6), respectively.

6. The air compressor of claim 5, wherein the first neck portion (722) of the first branch (72), the second neck portion (732) of the second branch (73), and the third neck portion (742) of the third branch (74) are respectively fitted through the openings (431, 531, 631) of the air blocking walls (43, 53, 63); the first leaf (721) of the first branch (72), the second leaf (731) of the second branch (73), and the third leaf (741) of the third branch (74) are located within the air blocking walls (43, 53, 63) and in tight contact with the O-rings (41, 51, 61) to seal the exit holes (4, 5, 6), respectively.

7. The air compressor of claim 5, wherein the air blocking walls (43, 53, 63) are configured to have predetermined heights greater than maximum distances that the branches (72, 73, 74) of the resilient sheet (7) are pushable up by the compressed air to travel.

8. The air compressor of claim 4, wherein the air blocking walls (44, 54, 64) are planar walls, each planar wall being located between two adjacent exit holes and extending from the top wall (21) towards a central axis of the cylinder (2), thus defining a plurality of gaps (441, 541, 641) between the planar walls (44, 54, 64), each gap facing the central axis of the cylinder (2) and corresponding to one of the exit holes (4, 5, 6), so that the branches (72, 73, 74) of the resilient sheet (7) are capable of fitting over the exit holes (4, 5, 6) and being in tight contact with the O-rings (41, 51, 61) to seal the exit holes (4, 5, 6), respectively.

9. The air compressor of claim 4, wherein the cylinder (2) has a tubular projection (22) formed on the top wall (21), the tubular projection (22) provided at its outer surface with a circular flange (221) and defining an annular groove (222) between the circular flange (221) and the top wall (21), each of the compression springs (42, 52, 62) having one end in contact with one of the branches (72, 73, 74) of the resilient sheet (7); the air storage container (3) is provided at an outer surface thereof with two coupling means (35) capable of being inserted into the annular groove (222) and engaged with the circular flange (221) of the cylinder (2).

10. The air compressor of claim 9, wherein the air storage container (3) is provided at an inner surface thereof with a plurality of columns (37, 38, 39) corresponding to the branches (72, 73, 74) of the resilient sheet (7), each of the column (37, 38, 39) being formed at its distal end with a limiting surface which is at a predetermined angle (θ)) to the top wall (21); each of the compression springs (42, 52, 62) has another end being fitted at the distal end of one of the columns (37, 38, 39), the compressive forces of the compression springs (42, 52, 62) enabling the branches (72, 73, 74) of the resilient sheet to seal the exit holes (4, 5, 6), respectively; wherein each of the columns (37, 38, 39) is located at a predetermined height above the corresponding branch of the resilient sheet (7) to limit the movement of the corresponding branch so that the resilient sheet (7) is prevented from elastic fatigue; the branches (72, 73, 74) of the resilient sheet are capable being in full surface contact with the limiting surfaces (370, 380, 390) of the columns (37, 38, 39) to ensure a stable operation of the branches (72, 73, 74) of the resilient sheet. (7).

11. The air compressor of claim 9, wherein the air storage container (3) is provided at an inner surface thereof with a plurality of hollow columns (371, 381, 391) corresponding to the branches (72, 73, 74) of the resilient sheet (7), each of the hollow columns (371, 381, 391) being formed at its distal end with a limiting surface which is at a predetermined angle (θ1) to the top wall (21); each of the compression springs (42, 52, 62) has another end being fitted into the distal end of one of the hollow columns (371, 381, 391), the compressive forces of the compression springs enabling the branches (72, 73, 74) of the resilient sheet to seal the exit holes (4, 5, 6), respectively; wherein each of the hollow columns (371, 381, 391) is located at a predetermined height above the corresponding branch of the resilient sheet (7) to limit the movement of the corresponding branch so that the resilient sheet (7) is prevented from elastic fatigue; the branches (72, 73, 74) of the resilient sheet are capable being in full surface contact with the limiting surfaces (372, 382,392) of the hollow columns (371, 381, 391) to ensure a stable operation of the branches.

12. The air compressor of claim 1, wherein the control mechanism further includes a plurality of O-rings (41, 51, 61) being placed around the exit holes (4, 5, 6) respectively, the root (70) of the resilient sheet being attached to the top wall (21) at a central point (P), the branches (72, 73, 74) of the resilient sheet being attached to the top wall (21) respectively at peripheral points (P1, P2, P3) close to the central point (P), the branches (72, 73, 74) of the resilient sheet (7) having sufficient elastic forces to enable themselves to be in tight contact with the O-rings (41, 51, 61) to seal the exit holes (4, 5, 6), respectively.

## Patentansprüche

1. Luftkompressor, der einen Hauptrahmen (11) zur Montage eines Motors (12) und einen Zylinder (2) beinhaltet, der mit einem Kolbenkörper (14) versehen ist, wobei der Motor (12) in der Lage ist, den Kolbenkörper (14) anzutreiben, eine Pendelbewegung durchzuführen, um in dem Zylinder (2) Druckluft zu erzeugen, die über Austrittslöcher, die an einer oberen Wand (21) des Zylinders (2) definiert sind, in einen Luftsammelbehälter (3) gelangt, wobei die obere Wand (21) des Zylinders (2) mit einer Mehrzahl an Austrittslöchem (4,5,6) versehen ist und die Austrittslöcher (4,5,6) von einem Steuermechanismus gesteuert werden, um geöffnet oder geschlossen zu werden, wobei der Steuerungsmechanismus ein Federblatt (7) umfasst, das eine Wurzel (7) und eine Mehrzahl an Zweigen (72,73,74) aufweist, die sich von der Wurzel (7) erstrecken und den Austrittslöchem (4,5,6) entsprechen,
**dadurch gekennzeichnet, dass**
die Austrittslöcher (4,5,6) Luftsperrwände (43,53,63)(44,54,64) aufweisen, die die Austrittslöcher voneinander isolieren, wobei die Luftsperrwände (43,53,63) zylindrische Wände sind, die jeweils die Austrittslöcher (4,5,6) umgeben, wobei jede der zylindrischen Wände eine Öffnung definiert, die zu der zentralen Achse des Zylinders (2) zeigt, wobei, wenn die in dem Zylinder (2) erzeugte Druckluft die Zweige des Federblattes (7) hochdrückt um die Austrittslöcher (4,5,6) zu öffnen, die instantane Hochdruckluft, die durch die Austrittslöcher (4,5,6) fließt, durch die Luftsperrwände zurückgehalten wird, um zu verhindern, dass die Luft die Bewegungen der Zweige des Federblatts (7) stört, so dass der Kolbenkörper (14) eine Pendelbewegung reibungsärmer durchführt und daher die Leistung des Luftkompressors gesteigert wird.

2. Luftkompressor gemäß Anspruch 1, bei welchem die Wurzel (70) des Federblatts (7) an einem zentralen Punkt (P) an der oberen Wand (21) angeordnet ist, wobei die Zweige (72,73,74) des Federblatts (7) jeweils an peripheren Punkten (P1, P2, P3) nahe dem zentralen Punkt (P) an der oberen Wand (21) angeordnet sind, wobei jeder der Zweige (72,73,74) des Federblatts (7) durch die Druckluft individuell bewegbar ist, ohne die Bewegungen der anderen Zweige zu beeinflussen, so dass der Kolbenkörper (14) eine Pendelbewegung reibungsärmer ausführt und daher die Leistung des Luftkompressors gesteigert wird.

3. Luftkompressor gemäß Anspruch 1, bei welchem der Zylinder (2), der die Austrittslöcher (4,5,6) und die Luftsperrwände (43,53,63) (44,54,64) umfasst, einstückig mit dem Hauptrahmen (11) ausgebildet ist.

4. Luftkompressor gemäß Anspruch 2, bei welchem der Steuermechanismus ferner eine Mehrzahl an O-Ringen (41,51,61) und eine Mehrzahl an Kompressionsfedem (42,52,62) umfasst, die O-Ringe (41,51,61) werden jeweils um die Austrittslöcher (4,5,6) angeordnet.

5. Luftkompressor gemäß Anspruch 4, bei welchem die Wurzel (70) im Wesentlichen an einer Mitte des Federblattes (7) angeordnet ist und ein zentrales Positionierloch (71) definiert; wobei die Zweige (72,73,74) sich von der Wurzel (70) erstrecken, um als eine Sternenkonfiguration zu erscheinen, und einen ersten Zweig (72), einen zweiten Zweig (73) und einen dritten Zweig (74) umfassen, wobei der erste Zweig (72) einen ersten Halsabschnitt (722) aufweist, der sich von der Wurzel (70) erstreckt und an einem ersten Blatt (721) endet ,und ein erstes Positionierloch (723) an einem Ende des ersten Halsabschnitts (722) nahe der Wurzel (70) definiert, wobei der zweite Zweig (73) einen zweiten Halsabschnitt (732) aufweist, der sich von der Wurzel (70) erstreckt und an einem zweiten Blatt (731) endet, und ein zweites Positionierloch (733) an einem Ende des zweiten Halsabschnitts (732) nahe zu der Wurzel (70) definiert, wobei der dritte Zweig (74) einen dritten Halsabschnitt (742) aufweist, der sich von der Wurzel (70) erstreckt und an einem dritten Blatt (741) endet, und ein drittes Positionierloch (743) an einem Ende des dritten Halsabschnitts (742) nahe zu der Wurzel (70) definiert, wobei das zentrale Positionierloch (71) der Wurzel (70) über einem Hauptansatz (24) angeordnet ist, der an der oberen Wand (21) des Zylinders (2) bereitgestellt ist, wobei das erste Positionierloch (723) des ersten Zweiges (72) über einem ersten Ansatz (241) angeordnet, der an der oberen Wand (21) des Zylinders (2) bereitgestellt ist, das zweiten Positionierloch (733) des zweiten Zweiges (73) über einem zweiten Ansatz (242) angeordnet ist, der an der oberen Wand (21) des Zylinders (2) bereitgestellt ist, wobei das dritte Positionierloch (743) des dritten Zweiges (74) über einem dritten Ansatz (243) angeordnet ist, der an der oberen Wand (21) des Zylinders (2) bereitgestellt ist, wobei die ersten, zweiten und dritten Blätter (721,731,741) konfiguriert sind, Größen aufzuweisen, die ausreichend sind, um die Austrittslöcher (4,5,6) abzudecken; wobei die Zweige (72,73,74) des Federblattes (7) in engem Kontakt mit den O-Ringen (41,51,61) stehen, um jeweils die Austrittslöcher (4,5,6) abzudichten.

6. Luftkompressor gemäß Anspruch 5, bei welchem der erste Halsabschnitt (722) des ersten Zweiges (72), der zweite Halsabschnitt (732) des zweiten Zweiges (73) und der dritte Halsabschnitt (742) des dritten Zweiges (74) entsprechend durch die Öffnungen (431,531,631) der Luftsperrwände (43,53,63) gesteckt sind, wobei das erste Blatt (721) des ersten Zweiges (72), das zweite Blatt (731) des zweiten Zweiges (73) und das dritte Blatt (741) des dritten Zweiges (74) innerhalb der Luftsperrwände (43,53,63) angeordnet und in engem Kontakt mit den O-Ringen (41,51,61) sind, um jeweils die Austrittslöcher (4,5,6) zu verschließen.

7. Luftkompressor gemäß Anspruch 5, bei welchem die Luftsperrwände (43,53,63) konfiguriert sind, vorbestimmte Höhen aufzuweisen, die größer sind als die maximalen Distanzen, die die Zweige (72,73,74) des Federblatts (7) durch die Druckluft verschiebbar sind, um sich zu bewegen.

8. Luftkompressor gemäß Anspruch 4, bei welchem die Luftsperrwände (44,54,64) planare Wände sind, wobei jede planare Wand zwischen zwei angrenzenden Austrittslöchem angeordnet ist und sich von der oberen Wand (21) zu einer zentralen Achse des Zylinders (2) erstreckt, sodass eine Mehrzahl an Lücken (441,541,641) zwischen den planaren Wänden (44,54,64) definiert sind, wobei jede Lücke zu der zentralen Achse des Zylinders (2) zeigt und einem der Austrittslöcher (4,5,6) entspricht, so dass die Zweige (72,73,74) des Federblattes (7) in der Lage sind, über die Austrittslöcher (4,5,6) zu passen und in engem Kontakt mit den O-Ringen (41,51,61) zu sein, um jeweils die Austrittslöcher (4,5,6) zu verschließen.

9. Luftkompressor gemäß Anspruch 4, bei welchem der Zylinder (2) einen rohrförmigen Vorsprung (22) aufweist, der an der oberen Wand (21) ausgebildet ist, wobei der rohrförmige Vorsprung (22) an seiner Außenfläche mit einem kreisförmigen Flansch (221) versehen ist und eine ringförmige Nut (222) zwischen dem kreisförmigen Flansch (221) und der oberen Wand (21) definiert, wobei jede der Kompressionsfedem (42,52,62) ein Ende aufweist, das mit einem der Zweige (72,73,74) des Federblattes (7) in Kontakt steht; wobei der Luftsammelbehälter (3) an seiner Außenfläche mit zwei Kupplungsmitteln (35) versehen ist, die in die ringförmige Nut (222) gesteckt werden können und mit dem kreisförmigen Flansch (221) des Zylinders (2) in Eingriff gebracht werden können.

10. Luftkompressor gemäß Anspruch 9, bei welchem der Luftsammelbehälter (3) an seiner Innenfläche mit einer Mehrzahl an Säulen (37,38,39) versehen ist, die den Zweigen (72,73,74) des Federblattes (7) entsprechen, wobei jede der Säulen (37,38,39) an ihrem distalen Ende mit einer Begrenzungsfläche ausgebildet ist, die in einem vorbestimmten Winkel (Θ) zu der oberen Wand (21) steht, wobei jede der Kompressionsfedem (42,52,62) ein anderes Ende aufweist, das an dem distalen Ende von einer der Säulen (37,38,39) angeordnet ist, wobei es die Druckkräfte der Kompressionsfedem (42,52,62) den Zweigen (72,73,74) des Federblattes ermöglichen, die Austrittslöcher (4,5,6) entsprechend abzudichten, wobei jede der Säulen (37,38,39) an einer vorbestimmten Höhe über dem entsprechenden Zweig des Federblattes (7) angeordnet ist, um die Bewegung des entsprechenden Zweiges einzuschränken, so dass das Federblatt (7) vor elastischer Ermüdung geschützt wird, wobei die Zweige (72,73,74) des Federblattes in der Lage sind, in vollem Oberflächenkontakt mit den Begrenzungsflächen (370,380,390) der Säulen (37,38,39) zu stehen, um einen stabilen Betrieb der Zweige (72,73,74) des Federblattes (7) sicherzustellen.

11. Luftkompressor gemäß Anspruch 9, bei welchem der Luftsammelbehälter (3) an seiner Innenfläche mit einer Mehrzahl an hohlen Säulen (371,381,391) versehen ist, die den Zweigen (72,73,74) des Federblattes (7) entsprechen, wobei jede der hohlen Säulen (371,381,391) an ihrem distalen Ende mit einer Begrenzungsfläche ausgebildet ist, die in einem vorbestimmten Winkel (Θ1) zu der oberen Wand (21) steht, wobei jede der Kompressionsfedem (42,52,62) ein anderes Ende aufweist, das in das distale Ende von einer der hohlen Säulen (371,381,391) eingefügt ist, wobei die Druckkräfte der Kompressionsfedem es den Zweigen (72,73,74) des Federblattes ermöglichen, jeweils die Austrittslöcher (4,5,6) abzudichten; wobei jede der hohlen Säulen (371,381,391) an einer vorhebestimmten Höhe über dem entsprechenden Zweig des Federblattes (7) angeordnet ist, um die Bewegung des entsprechenden Zweiges einzuschränken, so dass das Federblatt (7) vor elastischer Ermüdung geschützt wird, wobei die Zweige (72,73,74) des Federblattes in der Lage sind, in vollem Oberflächenkontakt mit den Begrenzungsflächen (372,382,392) der hohlen Säulen (371,381,391) zu stehen, um einen stabilen Betrieb der Zweige sicherzustellen.

12. Luftkompressor gemäß Anspruch 1, bei welchem der Steuermechanismus ferner eine Mehrzahl an O-Ringen (41,51,61) umfasst, die jeweils um die Austrittslöcher (4,5,6) angeordnet werden, wobei die Wurzel (70) des Federblattes an einem zentralen Punkt (P) an der oberen Wand (21) angeordnet ist, die Zweige (72,73,74) des Federblattes jeweils an peripheren Punkten (P1 ,P2,P3) nahe dem zentralen Punkt (P) an der oberen Wand (21) angeordnet sind und die Zweige (72,73,74) des Federblattes (7) ausreichende elastische Kräfte aufweisen, damit es ihnen möglich ist, in engem Kontakt mit den O-Ringen (41,51,61) zu stehen, um jeweils die Austrittslöcher (4,5,6) zu verschließen.

## Revendications

1. Compresseur d'air incluant un cadre principal (11) destiné au montage d'un moteur (12), et un cylindre (2) pourvu d'un corps de piston (14), le moteur (12) pouvant entraîner le corps de piston (14) pour opérer un mouvement de va-et-vient pour produire dans le cylindre (2) de l'air comprimé qui pénètre dans un récipient de stockage d'air (3) via des orifices de sortie définis au niveau d'une paroi supérieure (21) du cylindre (2); dans lequel la paroi supérieure (21) du cylindre (2) est pourvue d'une pluralité d'orifices de sortie (4, 5, 6) et l'ouverture ou la fermeture des orifices de sortie (4, 5, 6) est contrôlée par un mécanisme de commande, le mécanisme de commande incluant une plaque souple (7) ayant une racine (7) et une pluralité de branches (72, 73, 74) s'étendant à partir de la racine (7) et correspondant aux orifices de sortie (4, 5, 6),
**caractérisé en ce que**
les orifices de sortie (4, 5, 6) ont des parois de blocage de l'air (43, 53, 63)(44, 54, 64) qui isolent les orifices de sortie les uns des autres, dans lequel les parois de blocage de l'air (43, 53, 63) sont des parois cylindriques entourant respectivement les orifices de sortie (4, 5, 6), chacune des parois cylindriques définissant une ouverture faisant face à un axe central du cylindre (2), moyennant quoi, lorsque l'air comprimé produit dans le cylindre (2) pousse les branches de la plaque souple (7) vers le haut pour ouvrir les orifices de sortie (4, 5, 6), l'air haute-pression instantané qui s'écoule à travers les orifices de sortie (4, 5, 6) est limité par les parois de blocage de l'air pour empêcher l'air d'interférer avec les mouvements des branches de la plaque souple (7), de sorte que le corps de piston (14) opère un mouvement de va-et-vient de manière plus régulière et ainsi, la performance du compresseur d'air est augmentée.

2. Compresseur d'air selon la revendication 1, dans lequel la racine (70) de la plaque souple (7) est attachée à la paroi supérieure (21) au niveau d'un point central (P), les branches (72, 73, 74) de la plaque souple (7) étant attachées à la paroi supérieure (21) respectivement au niveau de points périphériques (P1, P2, P3) à proximité du point central (P), moyennant quoi chacune des branches (72, 73, 74) de la plaque souple (7) est mobile individuellement grâce à l'air comprimé sans affecter les mouvements des autres branches, de sorte que le corps de piston (14) opère un mouvement de va-et-vient de manière plus régulière et ainsi, la performance du compresseur d'air est augmentée.

3. Compresseur d'air selon la revendication 1, dans lequel le cylindre (2), incluant les orifices de sortie (4, 5, 6) et les parois de blocage de l'air (43, 53, 63) (44, 54, 64), est formé d'un seul tenant avec le cadre principal (11).

4. Compresseur d'air selon la revendication 2, dans lequel le mécanisme de commande comprend en outre une pluralité de joints toriques (41, 51, 61) et une pluralité de ressorts de compression (42, 52, 62), les joints toriques (41, 51, 61) étant placés autour des orifices de sortie (4, 5, 6) respectivement.

5. Compresseur d'air selon la revendication 4, dans lequel la racine (70) est sensiblement située au niveau d'un centre de la plaque souple (7) et définit un orifice de positionnement central (71) ; les branches (72, 73, 74) s'étendent à partir de la racine (70) pour apparaître selon une configuration en étoile et incluent une première branche (72), une deuxième branche (73) et une troisième branche (74), la première branche (72) ayant une première partie formant col (722) qui s'étend à partir de la racine (70) et se termine au niveau d'une première feuille (721), et définissant un premier orifice de positionnement (723) à une extrémité de la première partie formant col (722) à proximité de la racine (70), la deuxième branche (73) ayant une deuxième partie formant col (732), qui s'étend à partir de la racine (70) et se termine au niveau d'une deuxième feuille (731), et définissant un deuxième orifice de positionnement (733) à une extrémité de la deuxième partie formant col (732) à proximité de la racine (70), la troisième branche (74) ayant une troisième partie formant col (742), qui s'étend à partir de la racine (70) et se termine au niveau d'une troisième feuille (741) et définissant un troisième orifice de positionnement (743) à une extrémité de la troisième partie formant col (742) à proximité de la racine (70), l'orifice de positionnement central (71) de la racine (70) étant installé au-dessus d'un bossage principal (24) prévu au niveau de la paroi supérieure (21) du cylindre (2), le premier orifice de positionnement (723) de la première branche (72) étant installé au-dessus d'un premier bossage (241) prévu au niveau de la paroi supérieure (21) du cylindre (2), le deuxième orifice de positionnement (733) de la deuxième branche (73) étant installé au-dessus d'un deuxième bossage (242) prévu au niveau de la paroi supérieure (21) du cylindre (2), le troisième orifice de positionnement (743) de la troisième branche (74) étant installé au-dessus d'un troisième bossage (243) prévu au niveau de la paroi supérieure (21) du cylindre (2), les première, deuxième et troisième feuilles (721, 731, 741) étant configurées pour avoir des tailles suffisantes pour couvrir les orifices de sortie (4, 5, 6) ; moyennant quoi les branches (72, 73, 74) de la plaque souple (7) sont en contact étroit avec les joints toriques (41, 51, 61) pour sceller les orifices de sortie (4, 5, 6), respectivement.

6. Compresseur d'air selon la revendication 5, dans lequel la première partie formant col (722) de la première branche (72), la deuxième partie formant col (732) de la deuxième branche (73) et la troisième partie formant col (742) de la troisième branche (74) sont installées respectivement à travers les ouvertures (431, 531, 631) des parois de blocage de l'air (43, 53, 63); la première feuille (721) de la première branche (72), la deuxième feuille (731) de la deuxième branche (73) et la troisième feuille (741) de la troisième branche (74) sont situées à l'intérieur des parois de blocage de l'air (43, 53, 63) et en contact étroit avec les joints toriques (41, 51, 61) pour sceller les orifices d'étanchéité (4, 5, 6), respectivement.

7. Compresseur d'air selon la revendication 5, dans lequel les parois de blocage de l'air (43, 53, 63) sont configurées pour avoir des hauteurs prédéterminée supérieures aux distances maximales desquelles les branches (72, 73, 74) de la plaque souple (7) peuvent être poussées vers le haut par l'air comprimé pour se déplacer.

8. Compresseur d'air selon la revendication 4, dans lequel les parois de blocage de l'air (44, 54, 64) sont des parois planes, chaque paroi plane étant située entre deux orifices de sortie adjacents et s'étendant de la paroi supérieure (21) vers un axe central du cylindre (2), définissant ainsi une pluralité d'espaces (441, 541, 641) entre les parois planes (44, 54, 64), chaque espace faisant face à l'axe central du cylindre (2) et correspondant à un des orifices de sortie (4, 5, 6), de sorte que les branches (72, 73, 74) de la plaque souple (7) peuvent être montées au-dessus des orifices de sortie (4, 5, 6) et en contact étroit avec les joints toriques (41, 51, 61) pour sceller les orifices de sortie (4, 5, 6), respectivement.

9. Compresseur d'air selon la revendication 4, dans lequel le cylindre (2) présente une projection tubulaire (22) formée sur la paroi supérieure (21), la projection tubulaire (22) étant pourvue au niveau de sa surface externe d'un rebord circulaire (221) et définissant une gorge annulaire (222) entre le rebord circulaire (221) et la paroi supérieure (21), chacun des ressorts de compression (42, 52, 62) ayant une extrémité en contact avec une des branches (72, 73, 74) de la plaque souple (7); le récipient de stockage d'air (3) est pourvu au niveau d'une surface externe de celui-ci de deux moyens de couplage (35) pouvant être insérés dans la gorge annulaire (222) et en prise avec le rebord circulaire (221) du cylindre (2).

10. Compresseur d'air selon la revendication 9, dans lequel le récipient de stockage d'air (3) est pourvu au niveau d'une surface interne de celui-ci d'une pluralité de colonnes (37, 38, 39) correspondant aux branches (72, 73, 74) de la plaque souple (7), chacune des colonnes (37, 38, 39) étant formée à son extrémité distale d'une surface de limitation qui est à un angle prédéterminé (θ) par rapport à la paroi supérieure (21), chacun des ressorts de compression (42, 52, 62) a une autre extrémité installée au niveau de l'extrémité distale d'une des colonnes (37, 38, 39), les forces compressives des ressorts de compression (42, 52, 62) permettant aux branches (72, 73, 74) de la plaque souple de sceller les orifices de sortie (4, 5, 6), respectivement ; dans lequel chacune des colonnes (37, 38, 39) est située à une hauteur prédéterminée au-dessus de la branche correspondante de la plaque souple (7) pour limiter le mouvement de la branche correspondante de sorte que la plaque souple (7) est protégée contre la fatigue élastique ; les branches (72, 73, 74) de la plaque souple peuvent être mises en contact de surface total avec les surfaces de limitation (370, 380, 390) des colonnes (37, 38, 39) pour assurer un fonctionnement stable des branches (72, 73, 74) de la plaque souple (7).

11. Compresseur d'air selon la revendication 9, dans lequel le récipient de stockage d'air (3) est pourvu au niveau d'une surface interne de celui-ci d'une pluralité de colonnes creuses (371, 381, 391) correspondant aux branches (72, 73, 74) de la plaque souple (7), chacune des colonnes creuses (371, 381, 391) étant formée à son extrémité distale d'une surface de limitation qui est à un angle prédéterminé (θ1) par rapport à la paroi supérieure (21); chacun des ressorts de compression (42, 52, 62) a une autre extrémité installée dans l'extrémité distale d'une des colonnes creuses (371, 381, 391), les forces compressives des ressorts de compression permettant aux branches (72, 73, 74) de la plaque souple de sceller les orifices de sortie (4, 5, 6), respectivement ; dans lequel chacune des colonnes creuses (371, 381, 391) est située à une hauteur prédéterminée au-dessus de la branche correspondante de la plaque souple (7) pour limiter le mouvement de la branche correspondante de sorte que la plaque souple (7) est protégée contre la fatigue élastique ; les branches (72, 73, 74) de la plaque souple peuvent être en contact de surface total avec les surfaces de limitation (372, 382, 392) des colonnes creuses (371, 381, 391) pour assurer un fonctionnement stable des branches.

12. Compresseur d'air selon la revendication 1, dans lequel le mécanisme de commande inclut en outre une pluralité de joints toriques (41, 51, 61) placés autour des orifices de sortie (4, 5, 6) respectivement, la racine (70) de la plaque souple étant attachée à la paroi supérieure (21) au niveau d'un point central (P), les branches (72, 73, 74) de la plaque souple étant attachées à la paroi supérieure (21) respectivement au niveau de points périphériques (P1, P2, P3) à proximité du point central (P), les branches (72, 73, 74) de la plaque souple (7) ayant des forces élastiques suffisantes pour leur permettre d'être en contact étroit avec les joints toriques (41, 51, 61) pour sceller les orifices de sortie (4, 5, 6), respectivement.
